# EUROPEAN PATENT APPLICATION

(11) **EP 3 401 466 A1**
(43) Date of publication of application: **14.11.2018**
(21) Application number: 17170272.3
(22) Date of filing: 09.05.2017
(51) Int. Cl.: E04G 25/08, B66F 1/02, F16B 2/24, E04G 25/04

(54) **SAFETY FENCE SUPPORT POST**

(71) Applicant: WXSAFE AB, 831 48 Östersund (SE); TAMMET Systems Ltd, Aylesham, Kent CT3 3EP (GB)
(72) Inventor: Holmbom, Patrick, 836 95 Ås (SE)
(74) Representative: AWA Sweden AB

(57) **Abstract**

A support post for a safety fence assembly, the support post being arranged to be positioned between a floor and a ceiling, the support post comprising:
an outer tube having a floor end;
an inner tube arranged for sliding telescoping engagement with the outer tube and having a ceiling end;
a floor unit arranged to engage with the floor and attached to the outer tube at its floor end;
a ceiling unit arranged to engage with the ceiling and attached to the inner tube at its ceiling end; and
a tensioning device attached to the outer tube and arranged to engage with the inner tube for prolonging the safety post by moving the inner tube relative to the outer tube,
the tensioning device comprising a support attached to the outer tube, a first engagement element, which is supported by the support, which has an engagement portion arranged to engage with the inner tube, which is movable longitudinally of the outer tube between a resting position and a displaced position, and which is movable between a released position and an engaged position in relation to the inner tube,
a second engagement element, which is supported by the support, which has an engagement portion arranged to engage with the inner tube, and which is movable between a released position and an engaged position in relation to the inner tube, and
a lever, which is pivotally connected with the outer tube, the lever comprising an extension portion arranged to engage with the first engagement element and move it longitudinally away from the floor end, thereby extending the inner tube, when the lever is pivoted from a first position to a second position,
wherein the second engagement element is arranged to move to the released position when the inner tube is being extended, wherein the engaged position of the second engagement element is a default position, and wherein the released position of the first engagement element is a default position to which the first engagement element is arranged to return when the lever is moved from the second position towards the first position.

## Description

### FIELD OF THE INVENTION

The present invention relates to a support post for a safety fence assembly, the support post comprising an outer tube having a floor end, an inner tube arranged for sliding telescoping engagement with the outer tube and having a ceiling end, and a tensioning device attached to the outer tube and arranged to engage with the inner tube for prolonging the safety post by moving the inner tube relative to the outer tube, and thereby fastening the support post between the floor and the ceiling.

### BACKGROUND OF THE INVENTION

US 8152118 discloses a support post for a safety fence assembly of the above-mentioned kind, wherein the tensioning device comprises a collar element positioned on the inner tube, and a pivoting lever, which is arranged to move the collar element to a tilted configuration in which the collar element is tilted relative to the inner tube for engagement of the collar element with the inner tube. When tilted, the collar element is able to bring the inner tube along during the final pivoting movement of the lever, thereby urging the ceiling engaging end of the support post against the ceiling. When the pivoting movement has been completed the lever is in a lock position. This tensioning device moves the inner tube a relatively short distance requiring the user to first ensure that the inner tube has been extended as long as possible by hand, and to hold the inner tube in that position before using the lever.

There are some drawbacks with this known support post. For example, there is a risk of ending up with too little tension in the post to keep it in place when the wind load becomes significant, due to the short distance that the inner tube is moved when the lever is pivoted. Additionally, the mounting of the support post between the floor and the ceiling is troublesome since the user has to hold the inner tube in the extended position while simultaneously operating the lever to tension the post.

### SUMMARY OF THE INVENTION

It would be advantageous to reduce the risk of mounting the support post with too little tension. To better address this concern, in a first aspect of the invention there is presented a support post for a safety fence assembly, the support post being arranged to be positioned between a floor and a ceiling, the support post comprising an outer tube having a floor end, an inner tube arranged for sliding telescoping engagement with the outer tube and having a ceiling end, a floor unit arranged to engage with the floor and attached to the outer tube at its floor end, a ceiling unit arranged to engage with the ceiling and attached to the inner tube at its ceiling end, and a tensioning device attached to the outer tube and arranged to engage with the inner tube for prolonging the safety post by moving the inner tube relative to the outer tube. The tensioning device comprises a support, which is attached to the outer tube, and a first engagement element, which has an engagement portion arranged to engage with the inner tube, which is supported by the support, which is movable longitudinally of the outer tube, between a resting position and a displaced position, and which is movable between a released position and an engaged position relative to the inner tube. The tensioning device further comprises a second engagement element, which is supported by the support, which has an engagement portion arranged to engage with the inner tube, and which is movable between a released position and an engaged position relative to the inner tube, and a lever, which is pivotally connected with the outer tube. The lever comprises an extension portion arranged to engage with the first engagement element and move it longitudinally away from the floor end, thereby extending the inner tube, when the lever is pivoted from a first position to a second position. Furthermore, the second engagement element is arranged to move to the released position when the inner tube is extended, wherein the engaged position of the second engagement element is a default position, and wherein the released position of the first engagement element is a default position to which the first engagement element is arranged to return when the lever is moved from the second position towards the first position. Thereby there is provided a support post, which is extendible an optional distance by making one or several movements with the lever between the first and second positions. Additionally, the support post is not dependent on the distance between its ceiling end and the ceiling when the tensioning begins, but a necessary tensioning force is always reachable.

In accordance with an embodiment of the support post, the second engagement element is spring biased towards its engaged position.

In accordance with an embodiment of the support post, the lever is pivotally connected with the outer tube at a pivot joint, wherein a major part of the lever, comprising a handle portion, extends from the pivot joint in one direction, and wherein the extension portion extends from the pivot joint in a different direction.

In accordance with an embodiment of the support post, the major portion of the lever extends towards the floor end in the second position.

In accordance with an embodiment of the support post, the first engagement element is arranged to be tilted by the extension portion from the released position to the engaged position.

In accordance with an embodiment of the support post, the first and second engagement elements each comprises a plate extending at an angle to the longitudinal axis of the support post, the plate comprising an aperture through which the inner tube extends.

In accordance with an embodiment of the support post, each engagement portion comprises edge portions of a wall defining the aperture.

In accordance with an embodiment of the support post, the first engagement element is spring biased towards its released position.

In accordance with an embodiment of the support post, the first engagement element is spring biased towards its resting position.

In accordance with an embodiment of the support post, it comprises at least one biasing spring attached to the support and arranged around the inner tube, said at least one biasing spring acting on at least one of the first and second engagement elements.

In accordance with an embodiment of the support post, the first engagement element is located closer to the floor end than the second engagement element.

In accordance with an embodiment of the support post, the extension portion is elongated and is moving over centre during the movement of the lever from the first position to the second position, wherein the extension portion, in the second position, extends obliquely outwards from the longitudinal axis in direction from the pivot joint to its end, wherein the first engagement element exerts a force directed towards the floor end on the extension portion.

In accordance with an embodiment of the support post, the second engagement element is arranged to be released by being moved towards the ceiling end from the engaged position.

### BRIEF DESCRIPTION OF THE DRAWINGS

The invention will now be described in more detail and with reference to the appended drawings in which:
Fig. 1 is a schematic perspective view of an embodiment of the support post according to the present invention;
Figs. 2 and 3 are schematic side views of the support post of Fig. 1 in different operational positions;
Fig. 4 is a rear view of a part of the support post of Fig. 1;
Fig. 5 is a schematic cross-sectional side view of a top part of the support post of Fig. 1;
Fig. 6 is a schematic perspective view of another embodiment of the support post; and
Figs. 7 and 8 are schematic side views of a further embodiment of the support post.

### DESCRIPTION OF EMBODIMENTS

In accordance with a first embodiment of the support post 1 for a safety fence assembly, the support post comprises an outer tube 2, which has a floor end 3 and a top end 4, and a floor unit 5 arranged to engage with the floor and attached to the outer tube 2 at its floor end 3. Further, the support post 1 comprises an inner tube 6 arranged for sliding telescoping engagement with the outer tube 2, i.e. the inner tube has a slightly smaller outer diameter than the inner diameter of the outer tube 2, and is partly inserted into the outer tube 2. Thus, the inner tube 6 can be extended and retracted relative to the outer tube 2, thereby prolonging or shortening the support post 1. The inner tube 6 has a ceiling end 7, and a bottom end, which is hidden within the outer tube 2 in the drawings. In addition to providing a floor support, the floor unit 5 is a stop element preventing the inner tube 6 from extending out of the outer tube 2 at its floor end 3. The floor unit 5 can be chosen by the person skilled in the art to be any suitable conventional floor unit, typically having several floor engagement points 5a resting on the floor to get a good grip.

It should be noted that for purposes of definition a first point of the support post being closer to the ceiling end than a second point of the support post can be regarded as being above the second point, and consequently the second point can be regarded as being below the first point, in light of how the support post is oriented when it is mounted between a floor and a ceiling of a building.

The support post 1 further comprises a ceiling unit 8 arranged to engage with the ceiling and attached to the inner tube 6 at its ceiling end 7. The ceiling device 8 comprises a spring unit 9 which is typically arranged to be compacted when the support post 1 is mounted between a floor and a ceiling, to generate the retaining force, or clamping force, keeping the support post 1 in place. The ceiling device 8 can be of any suitable conventional kind, as chosen by the person skilled in the art. However, one particular example of a ceiling device 8 is suggested herein and it will be described in more detail below.

The support post 1 comprises fence holders 41 of any suitable kind, on which the fences are to be hanged when mounting a safety fence assembly consisting of several support posts 1 and several safety fences, and/or safety nets.

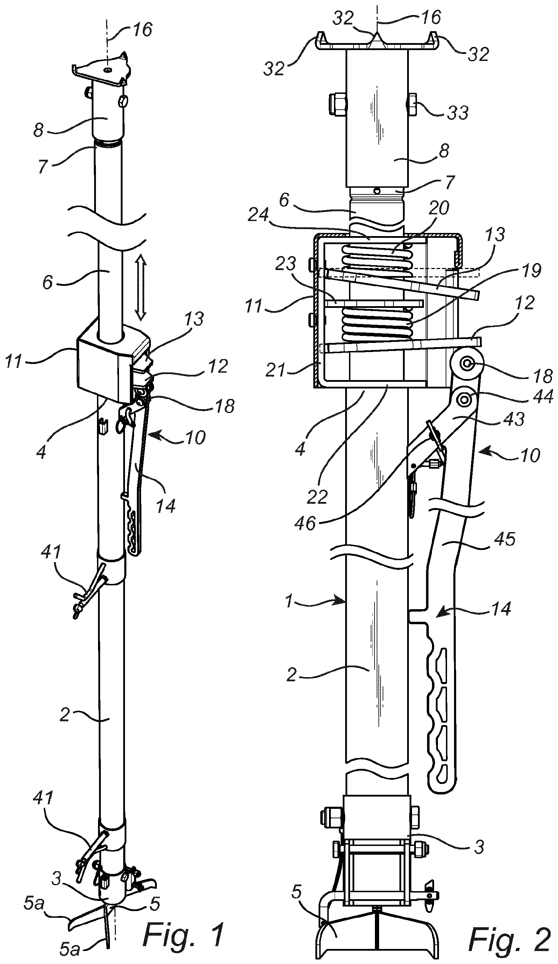

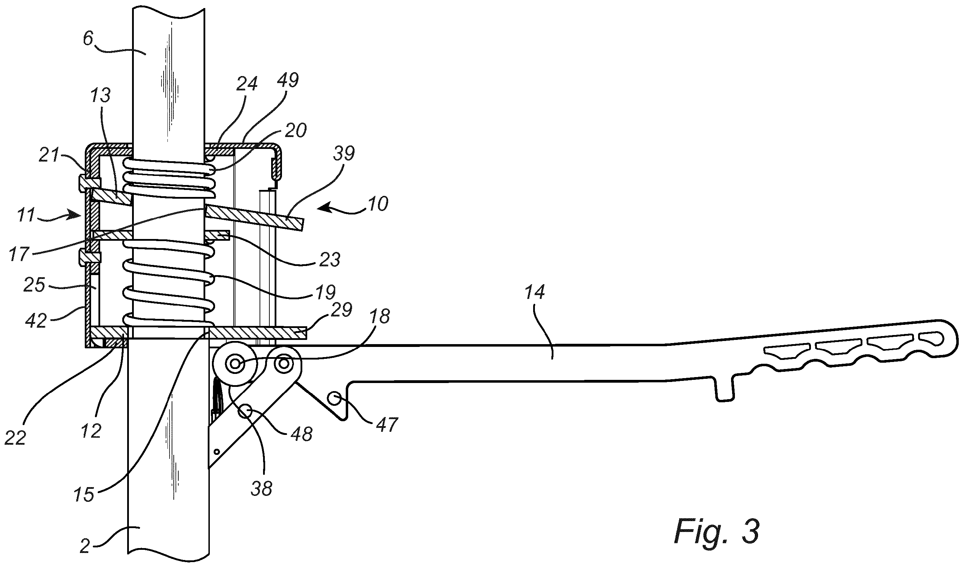

Furthermore, the support post 1 comprises a tensioning device 10 attached to the outer tube 2 and arranged to engage with the inner tube 6 for prolonging the safety post 1 by moving the inner tube 6 relative to the outer tube 2. The tensioning device comprises a support 11 attached to the outer tube 2, a first engagement element 12, which is supported by the support 11, a second engagement element 13, which is supported by the support 11, and a lever 14, which is pivotally connected with the outer tube 2. The support 11 further comprises a cover 42 enclosing the movable parts to protect the user from being injured. Fig. 2 is a partly cut-away view where a side wall of the cover 42 has been removed. Fig. 3 is a partly cross-sectional view, showing the support 11 and the first and second engagement elements 12, 13 in cross-section while the other parts are shown complete. In this embodiment the first and second engagement elements 12, 13 are constituted by plates.

The first engagement element 12 has an engagement portion 15 arranged to engage with the inner tube 6, and is movable longitudinally of the outer tube 2, i.e. along a longitudinal axis 16 of the support post 1, between a resting position and a displaced position. The engagement portion 15 constitute edge portions of a wall defining a central aperture of the first engagement element 12. The inner tube 6 extends with a play through the central aperture. The resting position is shown in Fig. 3, and is a first end position closest to the floor end 3. The displaced position is shown in figs. 1, 2 and 4, and is a second end position farthest away from the floor end 3. Additionally, the first engagement element 12 is movable between a released position and an engaged position in relation to the inner tube 6, as will be further explained below.

The second engagement element 13 has an engagement portion 17 arranged to engage with the inner tube 6, and is movable between a released position shown with broken lines in Fig. 2, and an engaged position, shown in Figs. 1, 3 and 4, in relation to the inner tube 6. The engagement portion 17 constitute edge portions of a wall defining a central aperture of the second engagement element 13. The inner tube 6 extends with a play through the central aperture.

The support post 1 comprises a lever bracket 43 arranged on the outer tube 2 close to its top end 4 and protruding from the outer tube 2. The lever 14 is pivotally connected with the lever bracket 43 at a pivot joint 44, spaced from the surface of the outer tube 2, and comprises an extension portion 18. The extension portion 18 is arranged to engage with the first engagement element 12 and move it longitudinally away from the floor end 3, thereby extending the inner tube 6, when the lever 14 is pivoted from a first position, shown in Fig. 3, to a second position, shown in Fig. 2. A major portion 45 of the lever 14, comprising a handle, extends from the pivot joint 44 in one direction, and the extension portion 18 extends from the pivot joint 44 a different direction. In this embodiment the extension portion 18 extends in the opposite direction of the major portion 45.

The second engagement element 13 is arranged to move to the released position when the inner tube 6 is being extended, wherein the engaged position of the second engagement element 13 is a default position. The resting position of the first engagement element 12 is a default position too, to which the first engagement element 12 is arranged to return when the lever 14 is moved from the second position towards the first position. In the resting position the first engagement element 12 is also in its released position. More particularly, the first engagement element 12 is spring biased towards its default position by means of a first biasing spring, which is a coil spring, 19, attached to the support 11, and arranged to encircle the inner tube 6. The second engagement element 13 is spring biased towards its default position by means of a second biasing spring, which is a coil spring, 20, attached to the support 11, and arranged to encircle the inner tube 6.

More particularly, the support 11 is generally E-shaped, as seen from the side of the support post 1, with plate shaped portions forming the E. In other words, it has an E-shaped longitudinal cross-section, with a back plate 21 extending in parallel with the longitudinal axis 16 of the support post 1, and three parallel leg plates 22-24 extending perpendicular to the back plate 21, and including a bottom plate 22 attached at one end to the back plate 21 and attached to the very top end 4 of the outer tube 2, an intermediate plate 23 attached at one end to the back plate 21 and spaced from the bottom plate 22 towards the ceiling end 7, and a top plate 24 attached at one end to the back plate 21 and spaced from the intermediate plate 23 towards the ceiling end 7. Each one of the bottom, intermediate and top plates 22-24 is provided with a centre hole through which the inner tube 6 extends, and through which the inner tube 6 has been inserted into the outer tube 2 when assembling the support post 1.

The first engagement element 12 is arranged between the bottom plate 22 and the intermediate plate 23, and the second engagement element 13 is arranged between the intermediate plate 23 and the top plate 24. The first biasing spring 19 is attached at one end to the intermediate plate 23, and the other end is engaged with the first engagement element 12 and urges it towards the bottom plate 22. The second biasing spring 20 is attached at one end to the top plate 24, and the other end is engaged with the second engagement element 13 and urges it towards the intermediate plate 23.

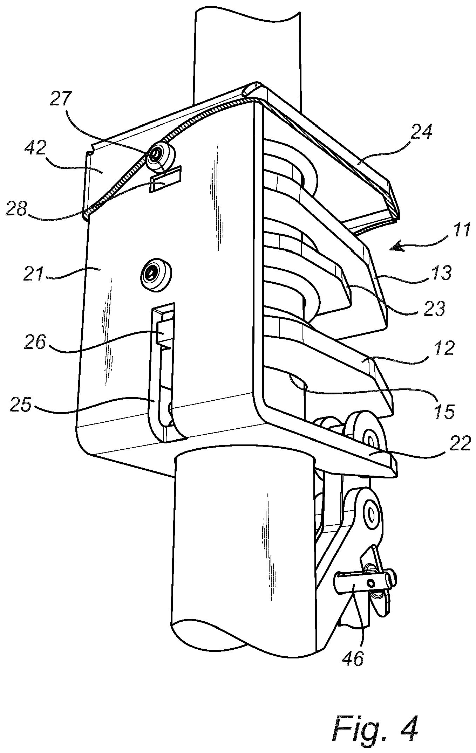

As shown in Figs. 3 and 4, the back plate 21 is provided with an aperture, or slit, 25. The aperture 25 is longitudinally elongated. The first engagement element 12 is provided with a guide protrusion 26 protruding into the aperture 25 and preventing the first engagement element 12 from rotating about the inner tube 6. The guide protrusion 26 is movable along the aperture 25. Consequently, the biasing force of the first biasing spring 19 pushes the first engagement element 12 to abutment against the bottom plate 22, i.e. to the default resting and released position where the inner tube 6 is free to pass through the central aperture of the first engagement element 12. However, this is true on condition that the lever 14 is in the first position.

The back plate 21 further comprises a hole 27 arranged above the aperture 25. The second engagement element 13 is provided with a pivot protrusion 28 protruding into the hole 27, thus acting as a seat for the second engagement element 13. The engagement between the hole 27 and the pivot protrusion 28 allows the second engagement element 13 to pivot upwards and downwards from a horizontal position, i.e. perpendicular to the longitudinal axis 16 of the support post 1. There is a play between the centre hole of the second engagement element 13 and the inner tube 6, and consequently between the engagement portion 17 and the inner tube 6, which allows for the pivoting as well. Since the second biasing spring 20 is biasing the second engagement element 13 towards the floor end 3, i.e. downwards, it tilts the second engagement element 13 slightly downwards such that the engagement portion 17 engages with the inner tube 6. In other words, the second engagement element 13 is tilted downwards. Thereby, the inner tube 6 is prevented from retracting in this default position of the second engagement element 13.

As an alternative, the top plate 24 is omitted and the second spring 20 is attached directly to a top wall 49 of the cover 42. This is possible provided that the top wall 49 is made rigid enough.

The first engagement element comprises a lip 29 protruding opposite to the guide protrusion 26. The lever 14 is located below the first engagement element 12, and its extension portion 18 is arranged to abut against the lip 29 at an underside thereof. The extension portion comprises a roller 38 at its very end, which facilitates movement of the extension portion 18 along the underside of the lip 29, by reducing the friction, during movement of the lever 14 between the first and second positions.

The second engagement element 13 comprises a similar lip 39 as the first engagement element 12, positioned above the lip 29 of the first engagement element 12. The lip of the second engagement element 13 is used for releasing the second engagement element 13 from the engaged state to allow the inner tube 6 to retract.

The ceiling device 8 comprises a tubular portion 30 extending outside of the inner tube 6 covering the ceiling end 7 of the inner tube 6, and a ceiling engagement plate 31 at a top end of the tubular portion 30. The roof engagement plate 31 is provided with protruding points 32 to provide a good grip at the ceiling. A transversal pin 33 extends through the tubular portion 30 and through opposite slits 34 of the inner tube 6. The slits 34 are longitudinally elongated to allow the ceiling device 8 to move longitudinally. The spring unit 9 comprises several cup springs 36 stacked on top of each other, a stop element 35 attached to the inner wall of the inner tube 6, on which stop element 35 the cup springs 36 rest, and a compactor element 37 arranged on top of the cup springs 36. The transversal pin 33 extends through an opening of a top protrusion 38 of the compactor element 37.

The support post 1 is mounted in the following way. The lever 14 of the tensioning device 10 is raised to the first position where is extends about perpendicularly of the outer tube 2, or at least at a significant angle to the outer tube 2. The first engagement element 12 is now in its resting position and also in its released position. Now it is possible to extend the inner tube 6 to until the support post 1 reaches a length being relatively close to the distance between the floor and the ceiling. This extension can be done while holding the support post 1 upright or while it is lying on the floor. When the user starts to extend the inner tube 6 the second engagement element 13 is moved to its released position, i.e. extending approximately perpendicular to the outer tube 2. As soon as the user stops extending the inner tube 6, the second engagement element 13 enters the engaging position, thereby preventing the inner tube 6 from retracting into the outer tube 2. By holding the support post 1 in place on the floor and pushing the lever 14 from the first to the second position one or several times, the inner tube 6 is extended the final distance to reach the ceiling. In other words, the inner tube us pumped up to reach the ceiling. During the movement of the lever 14 from the first position to the second position the extension portion acts on the lip 29 of the first engagement element 12, which first becomes slightly tilted and thereby is pivoted from its released position to its engaged position where it engages with the inner tube 6. By the continued pivoting of the lever 14 towards the second position the inner tube 6 is then lifted a distance, constituting a part of the distance between the bottom plate 22 and the intermediate plate 23 of the support 11, while the second engagement element 13 automatically releases its grip on the inner tube 6. As soon as the lever 14 is raised, i.e. pivoted back towards the first position, the second engagement element 13 locks the inner tube again, while the first engagement element 12 is pivoted back to its released position, where it releases its grip on the inner tube 6, and is then moved downwards to its resting position.

When the ceiling engagement plate 31 reaches the ceiling and the pumping continues, the cup springs 36 are compacted and generate a rising force against the ceiling and the floor. The inner tube 6 is provided with a ring shaped recess 40 at its ceiling end 7. The recess 40 is preferably painted with a bright colour. When the spring unit 9 is non-compacted there is a distance between the recess 40 and a bottom end of the tubular portion 30 of the ceiling device 8. When the tubular portion 30 has covered the recess 40 the support post 1 has been tensioned enough, i.e. the force exerted on the floor and the ceiling is enough to keep the support post 1 in place even with high wind loads on the fences mounted on it.

During the movement of the lever 14 from the first position to the second position the extension portion 18 is moving over centre, wherein the extension portion 18, in the second position, extends obliquely outwards from the longitudinal axis 16 in direction from the pivot joint 44 to its end. In this position, the first engagement element 12 exerts a force directed towards the floor end 3 on the extension portion 18, keeping the lever in the second position. However, for safety reasons, finally, the second position of the lever 14 is secured by means of a locking pin 46 entered through aligned holes 47, 48 of the lever 14 and the lever bracket 43, respectively.

When the support post 1 is to be demounted, i.e. removed, the second engagement element 13 is released by the user pushing its lip 29 upwards, thereby moving the second engagement element 13 to a horizontal, released position, shown with broken lines in Fig. 2, and pulling out the lever 14 towards the first position. This releases the inner tube 6, which is retracted since there is no longer any engagement stopping it from moving downwards. It should be noted that the second engagement element 13 is not necessarily carrying any significant load when the support post 1 is mounted, since the primary locking of the position of the inner tube 6 is carried out by the first engagement element 12. However, should the first engagement element 12 tend to slip in its engagement with the inner tube 6, or should the lever 14 be pulled out by mistake, the engagement between the second engagement element 13 and the inner tube 6 will take the load instead and secure that the tension generated by the ceiling device 8 will not decrease noticeably.

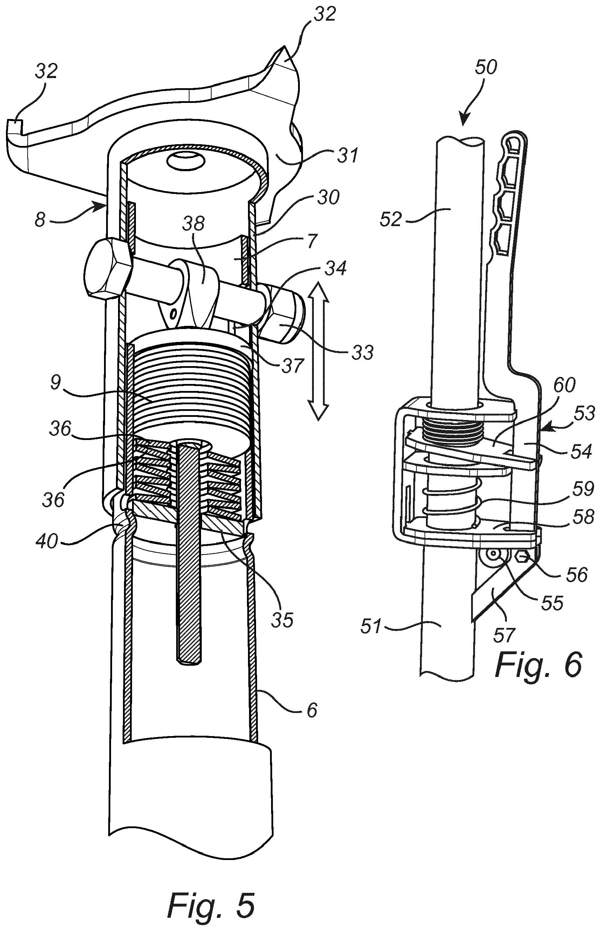

A second embodiment of the support post 50, as shown in Fig. 6, is similar to the first embodiment with only a few differences. The most apparent difference is that the major portion 54 of the lever 53 is arranged to extend upwards along the inner tube 52 when it is in the first position. The extension portion 55 of the lever 53 extends perpendicular to the major portion 54. In the first position, the extension portion extends radially of the outer tube 51 towards the outer tube 51 from the pivot joint 56 of the lever bracket 57.

The major portion of the lever 53 is arranged to be pivoted down to the second position, where it extends horizontally, i.e. perpendicular to the outer tube 51. Thus, during that movement the extension portion 55 pivots up, engaging with the first engagement element 58 and moving it upwards to extend the inner tube 52. This extension and tensioning mechanism and function is the same as in the first embodiment. However, when the ceiling device, not shown in Fig. 6, has been compacted and the lever 53 is put to rest it is typically moved to the first position. The biasing force of the first biasing spring 59 acting on the first engagement element 58 is high enough to keep the major portion 54 of the lever from accidentally pivoting down, so there is no need for a locking pin. When the lever is in the first position, the first engagement element 58 is in its released position, and the second engagement element 60 is in its engagement position. Consequently, the second engagement element 60 alone prevents the inner tube 52 from retracting.

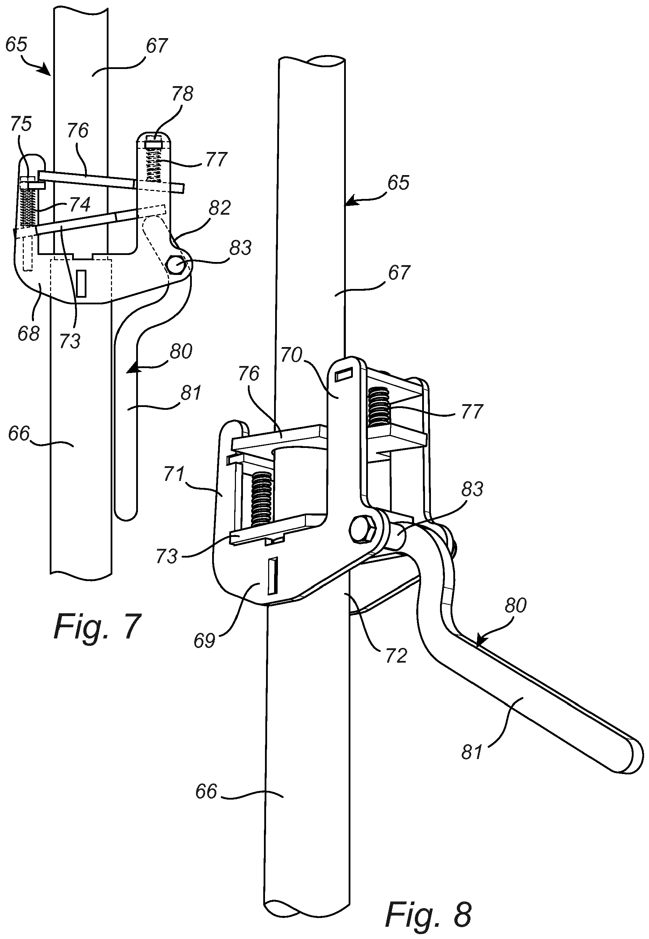

In a third embodiment of the support post 65, as shown in Figs. 7 and 8, the support 68 is generally U-shaped as seen from the side of it, having a bottom portion 69 attached to the outer tube 66 at a top end 72 thereof, a front portion 70 protruding upwards from the bottom portion 69 spaced from the inner tube 67, and a rear portion 71 protruding upwards from the bottom portion 69 spaced from the inner tube 67 opposite of the front portion 70. The first engagement element 73 is longitudinally movably connected with the rear portion 71. A first biasing spring 74 is attached at one end thereof to the rear portion 71 above the first engagement element 73, and the other end of the first biasing spring 74 is engaged with the first engagement element 73 and urges it downwards towards the released position of the first engagement element 73. The first biasing spring 74 is a coil spring encircling a central spring shaft 75, which extends through a hole of the first engagement element 73 allowing the first engagement element 73 to move along the spring shaft.

The second engagement element 76 is pivotally connected with the rear portion 71. A second biasing spring 77 is attached at one end thereof to the front portion 70 above the second engagement element 76, and the other end of the second biasing spring 77 is engaged with the second engagement element 76 and urges it downwards towards the engaged position of the second engagement element 76. The second biasing spring 77 is a coil spring encircling a central spring shaft 78, which extends towards the second engagement element 76 along a portion of the second biasing spring 77, allowing the second engagement element 76 to pivot upwards without reaching the bottom end of the spring shaft 78.

The lever 80 is pivotally connected with the support 68 at a pivot joint 83 arranged at the bottom portion 69, and at a bottom end portion of the front portion 70, spaced from the outer tube 66. The lever 80 has a major portion 81 extending downwards along the outer tube 72, in the second position, and an extension portion 82 extending obliquely upwards and towards the inner tube 67 in the second position.

The operation of the support post 65 according to the third embodiment is similar to that of the first embodiment and will therefore not be described.

While the invention has been illustrated and described in detail in the drawings and foregoing description, such illustration and description are to be considered illustrative or exemplary and not restrictive. The invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. A support post for a safety fence assembly, the support post being arranged to be positioned between a floor and a ceiling, the support post comprising:
an outer tube having a floor end;
an inner tube arranged for sliding telescoping engagement with the outer tube and having a ceiling end;
a floor unit arranged to engage with the floor and attached to the outer tube at its floor end;
a ceiling unit arranged to engage with the ceiling and attached to the inner tube at its ceiling end; and
a tensioning device attached to the outer tube and arranged to engage with the inner tube for prolonging the safety post by moving the inner tube relative to the outer tube,
the tensioning device comprising a support attached to the outer tube, a first engagement element, which is supported by the support, which has an engagement portion arranged to engage with the inner tube, which is movable longitudinally of the outer tube between a resting position and a displaced position, and which is movable between a released position and an engaged position in relation to the inner tube,
a second engagement element, which is supported by the support, which has an engagement portion arranged to engage with the inner tube, and which is movable between a released position and an engaged position in relation to the inner tube, and
a lever, which is pivotally connected with the outer tube, the lever comprising an extension portion arranged to engage with the first engagement element and move it longitudinally away from the floor end, thereby extending the inner tube, when the lever is pivoted from a first position to a second position,
wherein the second engagement element is arranged to move to the released position when the inner tube is being extended, wherein the engaged position of the second engagement element is a default position, and wherein the released position of the first engagement element is a default position to which the first engagement element is arranged to return when the lever is moved from the second position towards the first position.

2. The support post according to claim 1, wherein the second engagement element is spring biased towards its engaged position.

3. The support post according to claim 1 or 2, wherein the lever is pivotally connected with the outer tube at a pivot joint, wherein a major part of the lever, comprising a handle portion, extends from the pivot joint in one direction, and wherein the extension portion extends from the pivot joint in a different direction.

4. The support post according to claim 3, wherein the major portion of the lever extends towards the floor end in the second position.

5. The support post according to any one of the preceding claims,
wherein the first engagement element is arranged to be tilted by the extension portion from the released position to the engaged position.

6. The support post according to any one of the preceding claims,
wherein the first and second engagement elements each comprises a plate extending at an angle to the longitudinal axis of the support post, the plate comprising a central aperture through which the inner tube extends.

7. The support post according to claim 6, wherein each engagement portion comprises edge portions of a wall defining the aperture.

8. The support post according to any one of the preceding claims,
wherein the first engagement element is spring biased towards its released position.

9. The support post according to any one of the preceding claims,
wherein the first engagement element is spring biased towards its resting position.

10. The support post according to any one of the preceding claims,
comprising at least one biasing spring attached to the support and arranged around the inner tube, said at least one biasing spring acting on at least one of the first and second engagement elements.

11. The support post according to any one of the previous claims, wherein the first engagement element is located closer to the floor end than the second engagement element.

12. The support post according to any one of the preceding claims,
wherein the extension portion is elongated and is moving over centre during the movement of the lever from the first position to the second position, wherein the extension portion, in the second position, extends obliquely outwards from the longitudinal axis in direction from the pivot joint to its end, wherein the first engagement element exerts a force directed towards the floor end on the extension portion.

13. The support post according to any one of the preceding claims,
wherein the second engagement element is arranged to be released by being moved towards the ceiling end from the engaged position.
